## Europäisches Patentamt
## European Patent Office
## Office européen des brevets

(19)

(11) Veröffentlichungsnummer: **0 090 191**
**B1**

(12) # EUROPÄISCHE PATENTSCHRIFT

(45) Veröffentlichungstag der Patentschrift:
**13.08.86**

(21) Anmeldenummer: **83102060.7**

(22) Anmeldetag. **03.03.83**

(51) Int. Cl.⁴: **F 16 L 59/06,** H 01 M 10/50,
**F 17 C 3/08, F 16 L 59/02**

(54) Thermische Isolierung.

(30) Priorität: **27.03.82 DE 3211430**

(43) Veröffentlichungstag der Anmeldung:
**05.10.83 Patentblatt 83/40**

(45) Bekanntmachung des Hinweises auf die Patenterteilung:
**13.08.86 Patentblatt 86/33**

(84) Benannte Vertragsstaaten:
**BE CH FR GB IT LI NL**

(56) Entgegenhaltungen:
**EP-A-0 037 601
CA-A-880 867
DE-A-621 613
DE-A-2 659 777
DE-C-371 266
DE-C-858 613
FR-A-384 821
FR-A-1 177 988
GB-A-2 025 320**

(73) Patentinhaber: **BROWN, BOVERI & CIE
Aktiengesellschaft, Kallstadter Strasse 1, D-6800
Mannheim 31 (DE)**

(72) Erfinder: **Hasenauer, Dieter, Ing grad.,
Freudenbergstrasse 13, D-6940 Weinheim (DE)**
Erfinder: **Reiss, Harald, Dr., Dipl.- Phys., Im
Hirschmorgen 16, D-6906 Leimen (DE)**

(74) Vertreter: **Kempe, Wolfgang, Dr., c/o Brown,
Boveri & Cie AG Postfach 351, D-6800 Mannheim
1 (DE)**

## Beschreibung

Die Erfindung bezieht sich auf eine thermische Isolierung gemäß dem Oberbegriff des Patentanspruches 1.

Solche thermischen Isolierungen kommen in der Energietechnik zur Anwendung, insbesondere bei Einrichtungen, bei denen Wärmeverluste vermieden werden sollen. Thermische Isolierungen werden unter anderem bei Hochtemperatur-Speicherbatterien auf der Basis von Alkalimetall und Chalkogen verwendet. Die Speicherzellen werden mit thermischen Isolierungen umgeben, um ihre Abkühlung vor allem in den Betriebspausen der Hochtemperatur-Speicherbatterien zu verhindern, damit auch nach den Pausen eine Temperatur von 350°C in den Speicherzellen herrscht, was eine notwendige Voraussetzung für die optimale Funktionsweise der Speicherzellen ist.

Aus der DE-C-371 266 ist eine Vakuumisolation bekannt, die durch ein doppelwandiges Gehäuse begrenzt wird. In den evakuierten Raum zwischen den beiden Gehäusewandungen sind metallische oder nichtmetallische Schichten in einer Dicke von 5 mm angeordnet. Bei dem verwendeten Isoliermaterial handelt es sich um Metallfolien oder Papierschichten.

In der DE-C-858 613 ist eine Wärmeisolierung beschrieben, bei er als Isoliermaterial Mineralwolle oder aufgespaltener Glimmer verwendet wird. Die Verwendung eines doppelwandigen Gehäuse zur Begrenzung der Isolierung nach innen und außen ist hierbei nicht vorgesehen.

Aus der GB-A-2 025 320 ist eine thermische Isolierung bekannt, die aus mehreren Schichten aufgebaut ist. Zwischen jeweils zwei nicht gasdurchlässigen Schichten aus einem metallischen Material ist eine Mineralwolle oder Keramikpapier angeordnet.

In der DE-C-621 613 ist ein Wärmeschutzkörper beschrieben, dessen Isoliermaterial durch ein Glasgespinst gebildet wird. Die Hohlräume zwischen diesem langfasrigen Material werden durch ein kurzfasriges oder pulverförmiges Material ausgefüllt.

Aus der DE-A-28 19 026 ist eine elektrochemische Speicherbatterie mit einer thermischen Isolierung bekannt. Die Isolierung wird durch einen evakuierten Raum gebildet, innerhalb dessen Metallfolien angeordnet sind. Die Metallfolien sind senkrecht zum Temperaturgradienten angeordnet. Der Abstand zwischen den Metallfolien ist sehr klein.

Von Nachteil bei dieser Isolierung ist, daß sie nicht druckbelastet werden kann, ohne daß die Wärmeleitfähigkeit starkt ansteigt. Wird sie durch ein Gewicht belastet, so werden die Metallfolien aneinander gedrückt, wodurch zunehmend flächenförmige Kontaktstellen zwischen den einzelnen Folien gebildet werden. Dadurch wird der Festkörperanteil an der totalen Wärmeleitfähigkeit der thermischen Isolierung auf nicht mehr vernachlässigbare Werte erhöht.

Des weiteren ist eine thermische Isolierung für Hochtemperatur-Speicherbatterien bekannt, die aus Glas- oder Mineralwolle aufgebaut ist. Bei dieser Isolierung müssen zur Erzielung einer ausreichenden Wirkung erhebliche Wandstärken vorgesehen werden, damit sich die Hochtemperatur-Speicherbatterien, insbesondere In den Betriebspausen, nicht zu schnell abkühlen, und die Arbeitstemperatur von 350°C lange gehalten werden kann. Da solche dickwandigen Isolierungen die Abmessungen und/oder das Gewicht der Hochtemperatur-Speicherbatterie erheblich vergrößern, ist die Energiespeicherdichte, d.h. die pro Gewichts- oder Volumeneinheit speicherbare Energie, gering.

Der Erfindung liegt deshalb die Aufgabe zugrunde, eine thermische Isolierung zu schaffen, die eine sehr hohe Druckbelastbarkeit und gleichzeitig eine sehr kleine Wärmeleitfähigkeit aufweist.

Diese Aufgabe wird erfindungsgemäß durch die Merkmale des Patentanspruches 1 gelöst.

Innerhalb des evakuierten Raumes, der die äußere Begrenzung der thermischen Isolierung bildet, sind mehr als 100 flächige dünne Schichten hintereinander angeordnet. Die Schichten verlaufen zueinander parallel und sind in einem vorgebbaren Abstand voneinander angeordnet. Der Abstand zwischen zwei aufeinander folgende Schichten ist kleiner als 1 mm. Bei den Schichten handelt es sich vorzugsweise um Folien aus Glimmerpapier. Falls es die Gegebenheiten erfordern, können die Folien auch teilweise aus Glas- oder Keramikpapier gebildet werden. Zur Ausbildung der Schichten kann das Glimmerpapier um die innere Begrenzung der thermischen Isolierung gewickelt werden. Zwischen je zwei aufeinanderfolgenden Schichten ist wenigstens eine als Abstandhalter dienende Zwischenschicht angeordnet. Die Zwischenschicht kann aus einer Glaseoidegewebelage bestehen. Erfindungsgemäß kann die Zwischenschicht auch durch Glasfaserpapier gebildet werden. Die Verwendung von Keramikfaserpapier als Zwischenschicht ist ebenfalls möglich. Wird die thermische Isolierung hohen Druckbelastungen ausgesetzt, so wird durch die jeweils zwischen zwei Glimmerpapierfolien angeordnete Glaseidegewebelage ein flächenförmiger Kontakt zwischen diesen Schichten verhindert. Ist abzusehen, daß die thermische Isolierung nur kleinen Druckbelastungen ausgesetzt wird, so können die Zwischenschichten auch aus Glimmerpulver gebildet werden. Die einzelnen Körnchen des Glimmerpulvers dienen als stegartige Abstandhalter und können bei nur geringer Druckbelastung der thermischen Isolierung den Kontakt zwischen zwei benachbarten Schichten auf endlich viele Punkte beschränken. Bei Verwendung der erfindungsgemäßen Schichten sollte der Raum einen Restgasdruck von weniger als 0,1 mbar aufweisen.

Im Gegensatz zu den bisher verwendeten Metallfolien-Isolierungen kommt es bei der Verwendung von Folien aus einem nichtmetallischen Material, insbesondere bei Folien aus Glimmerpapier, zu keiner nennenswerten Vergrößerung der Wärmeleitfähigkeit, wenn das Isoliermaterial durch einen äußeren Druck belastet wird. Diese Tatsache läßt sich anhand der nachfolgenden Überlegung verdeutlichen. Wird eine aus vielen dünnen Folien, die parallel zueinander angeordnet sind, bestehende thermische Isolierung komprimiert, so entstehen mit zunehmender Druckbelastung aus den anfänglich punktförmigen Wärmebrücken zunehmend flächige Kontakte.

Die zwischen jeweils zwei aufeinander folgenden Schichten angeordneten Abstandhalter können dies nur teilweise unterbinden. Obwohl die Kontakte in der Isolationsebene statistisch verteilt sind, bilden sich von der heißen zu der kalten Seite hin durchgehende Wärmebrücken, da die Wärmeleitung in der Folienebene die Kontaktstellen verknüpft. Dieser Effekt ist bei Metallfolien wegen der großen Wärmeleitfähigkeit $\lambda$ sehr groß. Dagegen kann bei Verwendung von Folien aus Glimmerpapier der Wärmestrom durch die Folie in Richtung ihrer Schichtdicke und in ihrer Ebene wegen der viel kleineren Wärmeleitfähigkeit $\lambda$ dieses Materials drastisch gesenkt werden. Bei einer Temperatur von 300°C beträgt die Wärmeleitfähigkeit von Aluminium $\lambda \approx 200 W/(m.K)$, während die Wärmeleitfähigkeit von Glimmerpapier $\lambda \approx 0.2 W/(m.K)$ beträgt. Der Wärmestrom ist bei Verwendung von Glimmerpapier deshalb bei der gleichen Anzahl von Kontaktstellen näherungsweise tausendmal kleiner als bei Aluminiumfolien. Metallfolien wurden bis jetzt insbesondere deshalb verwendet, da sie eine besonders gute Isolationswirkung aufweisen, die auf dem hohen thermischen Reflektionsvermögen dieser Metallfolien beruht. Die bei der erfindungsgemäßen thermischen Isolierung verwendeten Folien aus Glimmerpapier weisen dagegen ein wesentlich kleineres thermisches Reflektionsvermögen als die herkömmlich verwendeten Metallfolien auf, so daß sie ein größeres thermisches Emissionsvermögen besitzen. Die Strahlungsleistung $\dot{Q}$ durch eine ebene mehrschichtige thermische Isolation wird durch die Gleichung beschrieben:

$$\dot{Q} = \frac{\dot{Q}_0}{1 + N \cdot (\varepsilon_0 / \varepsilon_F)}$$

$\dot{Q}_0$ bedeutet hierbei die Strahlungsleistung zwischen zwei ebenen parallelen Wänden verschiedener Temperatur, wenn zwischen den Wänden keine Folie angeordnet ist.

N bedeutet die Anzahl der Folien,

$\varepsilon_0$ das thermische Emissionsvermögen der Wände und

$\varepsilon_F$ das thermische Emissionsvermögen der Folien.

Bei Verwendung von Metallfolien weist $\varepsilon_F$ einen Wert von 0,05 auf. Mit $\varepsilon_0 = 0,9$ ergibt sich für eine thermische Isolierung mit mehreren ebenen metallischen Schichten

$$\dot{Q} = \frac{\dot{Q}_0}{(1 + 18 N)}$$

Erfindungsgemäß werden an Stelle von metallischen Schichten Folien aus einem nichtmetallischen Material verwendet. Für die Strahlungsleistung $\dot{Q}$ durch eine ebene Isolation, deren Isolationsmaterial aus Glimmerpapier besteht, ergibt sich folgender Wert:

$$\dot{Q} = \frac{\dot{Q}_0}{(1 + 1,3 N)}$$

$$\underline{\text{mit}} \quad \varepsilon_0 / \varepsilon_F = 0.9 / 0.7 = 1.3$$

Daraus ergibt sich, daß die gleiche Verringerung der Strahlungsleitung mit nur einer um das 14-fache gegenüber Metallfolien erhöhten Anzahl von Glimmerfolien erzielt werden kann. Dies bedeutet durchaus nicht, daß die thermische Isolierung dadurch eine extrem große Dicke erhält. Als Beispiel sei angeführt, daß bei 500 Glimmerfolien, wobei zwischen je zwei aufeinanderfolgenden Glimmerfolien eine Glasseidegewebelage angeordnet ist, die Gesamtdicke der Isolierung höchstens 35 mm beträgt. Die Isolierung weist eine entsprechende Abmessung auf, wenn die zwischen je zwei aufeinanderfolgenden Glimmerfolien angeordnete Zwischenschicht durch ein Glas- oder Keramikfaserpapier gebildet wird. Dabei wird davon ausgegangen, daß die verwendeten Glimmerfolien jeweils eine Dicke von 50µm aufweisen. Glimmerfolien mit dieser geringen Schichtstärke sind im Handel erhältlich.

Die Erfindung wird nachfolgend anhand von Zeichnungen erläutert.

Es zeigen:

Fig. 1 einen Vertikalschnitt durch eine thermische Isolierung für eine Hochtemperatur-Speicherbatterie,

Fig. 2 eine Rohrleitung mit der thermischen Isolierung.

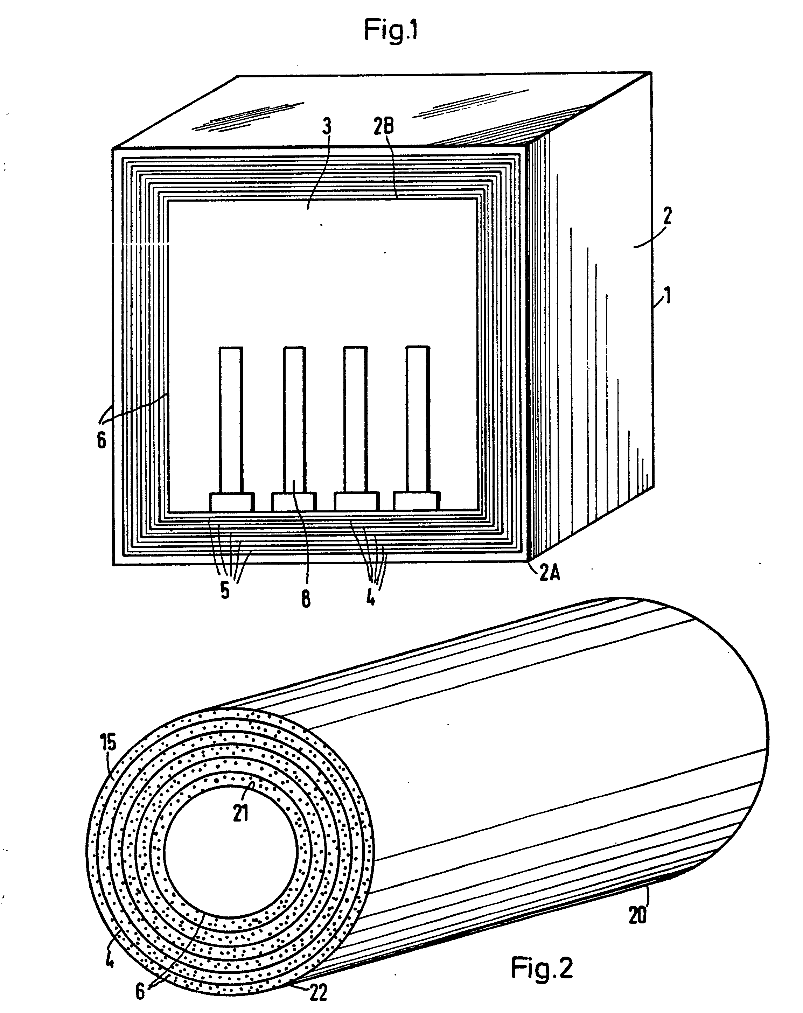

Fig. 1 zeigt die thermische Isolierung 1, die von einem doppelwandigen Gehäuse 2 begrenzt ist. Dieses weist einen quaderförmigen Querschnitt auf. Es besitzt einen Innenraum 3, der z. B. für die Aufnahme von Speicherzellen geeignet ist. Die Wände des Gehäuses 2 sind aus Stahl oder Edelstahl gefertigt. Die äußeren und inneren Begrenzungswände 2A und 2B des Gehäuses 2 sind in einem vorgebbaren Abstand parallel zueinander angeordnet. Der Abstand zwischen den inneren und äußeren Begrenzungswänden 2A und 2B richtet sich nach der Dicke der Isolierung 1. Zwischen den äußeren und inneren Begrenzungswänden des Gehäuses 2 befindet sich der evakuierte Raum 6. Die äußeren metallischen Begrenzungswände 2A sind gasdicht miteinander verbunden, insbesondere miteinander verschweißt. Das gleiche gilt für die inneren metallischen Begrenzungswände 2B des Gehäuses. Durch diese Maßnahme wird erreicht, daß der zwischen den Wänden 2A und 2B liegende Raum 6 gasdicht verschließbar ist. Insbesondere kann er dauerhaft evakuiert werden. Bei dem hier gezeigten Ausführungsbeispiel weist der Raum 6 einen Restgasdruck von weniger als 0,1 mbar auf. Vor dem gasdichten Verschließen und Evakuieren des Raumes 6 wird in diesen das Isoliermaterial 4 eingebracht. Bei dem hier gezeigten Ausführungsbeispiel besteht das Isoliermaterial 4 aus einer Vielzahl von flächigen dünnen Schichten. Die Schichten 4 sind hintereinander in parallelen Ebenen senkrecht zum Temperaturgradienten angeordnet.

Zwischen jeweils zwei aufeinanderfolgenden Schichten 4 ist ein Abstand von definierter Größe vorgesehen. Damit der Abstand zwischen je zwei aufeinanderfolgenden Schichten 4 eingehalten wird, ist zwischen diesen jeweils eine Zwischenschicht 5 angeordnet, die als Abstandhalter dient. Bei dem hier gezeigten Ausführungsbeispiel werden die Zwischenschichten 5 durch jeweils eine Glasseidegewebelage gebildet. An Stelle einer Glasseidegewebelage kann auch ein Keramikfaserpapier als Zwischenschicht 5 verwendet werden. Ist die thermische Isolierung 1 nicht druckbelastet, so wird durch die Zwischenschichten eine Berührung zwischen jeweils zwei aufeinanderfolgenden Folien aus Glimmerpapier vollständig vermieden. Die Anzahl der innerhalb des Raumes 6 hintereinander angeordneten Schichten 4 richtet sich nach der gewünschten restlichen Strahlungsleistung der thermischen Isolierung 1. Wird die thermische Isolierung für eine Hochtemperatur-Speicherbatterie verwendet, deren Speicherzellen 8 auf einer konstanten Temperatur von 350°C gehalten werden sollen, so sind innerhalb des Raumes 6 mindestens 500 Schichten aus Glimmerpapier anzuordnen. Bei der Herstellung der thermischen Isolierung 1 wird das die Schichten 4 bildende Glimmerpapier vorzugsweise um die inneren Begrenzungswände 2B des Gehäuses 2 gewickelt. Zwischen jeweils zwei aufeinanderfolgenden Lagen einer solchen Wicklung wird eine Zwischenschicht aus Glasseidegewebe eingefügt. Glasfaser- oder Keramikpapier kann ebenfalls für die Bildung der Zwischenschicht verwendet werden. Werden bspw. 500 Schichten 4 mit den jeweils erforderlichen Zwischenschichten 5 um die inneren Begrenzungswände 2B des Gehäuses 2 gewickelt, so weist die thermisch Isolierung 1 eine Gesamtdicke von höchstens 35 mm auf. Dabei wird davon ausgegangen, daß jede Schicht 4 höchstens eine Dicke von 50 µm aufweist und die Glasseidegewebelagen bzw. die Glasfaser- oder Keramikpapiere jeweils 20 µm dick sind. Dickere Glasseidegewebelagen bzw. Glasfaser- oder Keramikpapiere können auch verwendet werden, jedoch wird dadurch die gesamte Isolationsdicke erhöht. Der Raum 6 muß deshalb höchstens eine Breite von 40 mm aufweisen. Sind alle erforderlichen Schichten 4 innerhalb des Raumes 6 angeordnet, so werden die äußeren Begrenzungswände 2A des Gehäuses 2 gasdicht miteinander verbunden.

Anschließend wird der Raum 6 evakuiert. Bei der hier gezeigten thermischen Isolierung 1 sind im Innenraum 3 des Gehäuses 2 die Speicherzellen 8 einer Hochtemperatur-Speicherbatterie auf der Basis von Natrium und Schwefel angeordnet. Die Speicherzellen 8 sind über elektrische Leitungen (hier nicht dargestellt) mit dem Außenbereich verbunden. Für die Durchführung der elektrischen Leitungen (hier nicht dargestellt) sind spezielle Öffnungen (hier nicht dargestellt) innerhalb der thermischen Isolierung 1 vorgesehen. Durch den äußeren atmosphärischen Druck und durch das Gewicht der Speicherzellen 8 wird die thermische Isolierung 1, insbesondere im Bereich der Auflagefläche der Speicherzellen 8, zusammengedrückt. Hierdurch kommt es zu einer Verringerung des Abstandes zwischen den einzelnen Schichten 4 der thermischen Isolierung 1. Durch die Zwischenschichten 5 wird ein flächiger Kontakt von jeweils zwei aufeinanderfolgenden Schichten 4 vermieden. Die Annäherungen der Schichten 4 aneinander können jedoch durch die Zwischenschichten 5 nicht ganz vermieden werden. Dies ist jedoch bei der hier gezeigten thermischen Isolierung nicht von Nachteil, da durch die sehr kleine Festkörperwärmeleitfähigkeit der Folien 4 bewirkt wird, daß die totale Leitfähigkeit der thermischen Isolierung 1 hierdurch nur unwesentlich vergrößert wird.

Fig. 2 zeigt eine weitere Ausführungsform der thermischen Isolierung 1. Diese ist hierbei um ein Rohrleitungssystem 20 angeordnet, innerhalb dessen heiße strömende Medien, wie z.B. Gase transportiert werden. Fig. 2 zeigt nur einen begrenzten Abschnitt dieses Rohrleitungssystems 20. Die thermische Isolierung wird auch hierbei wiederum durch einen gasdicht nach außen verschlossenen Raum 6 gebildet. Die Begrenzung des Raumes 6 erfolgt durch zwei Rohre 21 und 22, die unterschiedliche Durchmesser aufweisen. Insbesondere ist das mit dem kleineren Durchmesser versehene Rohr 21 konzentrisch innerhalb des Rohres 22 angeordnet. Dadurch wird ein gleichmäßiger Zwischenraum zwischen den beiden Rohren 21 und 22 geschaffen, der als Raum 6 für die thermische Isolierung 1 dient. An den Enden dieser beiden Rohre 21 und 22 ist der Raum 6 durch metallische Ringscheiben (hier nicht dargestellt) gasdicht verschlossen. Das Isoliermaterial 4 wird auch hierbei durch Folien aus Glimmerpapier gebildet. Das Glimmerpapier wird zur Ausbildung der Schichten um das Rohr 21 gewickelt. Zwischen jeweils zwei aufeinanderfolgenden Schichten 4 aus Glimmerpapier wird eine Zwischenschicht 15 angeordnet. Bei dem hier gezeigten Ausführungsbeispiel wird die Zwischenschicht durch Glimmerpulver gebildet. Glimmerpulver kann dann als Zwischenschicht verwendet werden, wenn die thermische Isolierung keinen allzu hohen Druckbelastungen ausgesetzt ist. Wird ein strömendes Medium durch das Innere des Rohres 21 geleitet, so kommt es zu keiner nennenswerten Druckbelastung der thermischen Isolierung. Die Glimmerpapierschichten 4 werden hierdurch nicht zusammengedrückt. Eine Druckbelastung der thermischen Isolierung von außen wird durch das Rohr 22 von den Schichten 4 ferngehalten. Der zwischen den beiden Rohren 21 und 22 gebildete Hohlraum 6 wird auch hierbei evakuiert. Er sollte einen Restgasdruck von höchstens 0,1 mbar aufweisen.

Glimmerpulver kann auch bei der in Fig. 1 gezeigten thermischen Isolierung zur Ausbildung der Zwischenschicht verwendet werden, wenn keine zu große Druckbelastung der thermischen Isolierung zu erwarten ist.

Bei den beiden in den Figuren 1 und 2 gezeigten Ausführungsbeispielen bestehen die Schichten 4 aus Glimmerpapier.

## Patentansprüche

1. Thermische Isolierung (1) mit einem doppelwandigen Gehäuse (2), zwischen dessen beiden Gehäusewandungen (2A und 2B) ein evakuierter Raum (6) vorgesehen ist, der mindestens eine den Wärmefluß zwischen den beiden Gehäusewandungen (2A und 2B) hemmende, senkrecht zum Temperaturgradienten angeordnete nichtmetallische Schicht (4) aufweist, dadurch gekennzeichnet, daß innerhalb des Raumes (6) dünne Schichten (4) in einem Abstand parallel hintereinander angeordnet und durch Folien aus Glimmer-, Glas oder Keramikfaserpapier gebildet sind, und daß zwischen jeweils zwei aufeinanderfolgenden Schichten (4) mindestens eine als Abstandshalter dienende druckbelastbare Zwischenschicht (5, 15) angeordnet ist.

2. Thermische Isolierung nach Anspruch 1, dadurch gekennzeichnet, daß die Zwischenschichten (5) durch Glaseidegewebelagen gebildet sind.

3. Thermische Isolierung nach Anspruch 1, dadurch gekennzeichnet, daß die Zwischenschichten (5) aus Glasfaserpapier gebildet sind.

4. Thermische Isolierung nach Anspruch 1, dadurch gekennzeichnet, daß die Zwischenschichten (5) durch Keramikfaserpapier gebildet sind.

5. Thermische Isolierung nach Anspruch 1, dadurch gekennzeichnet, daß die Zwischenschichten (15) durch Glimmerpulver gebildet sind.

6. Thermische Isolierung nach einem der Ansprüche 1 bis 5, dadurch gekennzeichnet, daß die Folien (4) und Schichten (5) um die Außenflächen der inneren Begrenzung (2B) des Gehäuses (2) angeordnet sind, und daß der die Folien (4) und die Zwischenschichten (5) enthaltende Raum (6) einen Restgasdruck von weniger als 0,1 mbar aufweist.

## Claims

1. Thermal insulation (1) with a double-walled housing (2), between the two housing walls (2A and 2B) of which an evacuated space (6) is provided which has at least one non-metallic layer (4) which impedes the heat flux between the two housing walls (2A and 2B) and is arranged perpendicular to the temperature gradient, characterised in that, within the space (6), thin layers (4) are arranged in parallel one behind the other at a spacing and are formed by foils of mica paper, glass paper or ceramic fibre paper, and that at least one pressure-bearing interlayer (5, 15) serving as a spacer is arranged between every two successive layers (4).

2. Thermal insulation according to Claim 1, characterised in that the interlayers (5) are formed by plies of glass roving fabric.

3. Thermal insulation according to Claim 1, characterised in that the interlayers (5) are formed by glass fibre paper.

4. Thermal insulation according to Claim 1, characterised in that the interlayers (5) are formed by ceramic fibre paper.

5. Thermal insulation according to Claim 1, characterised in that the interlayers (15) are formed by mica powder.

6. Thermal insulation according to one of Claims 1 to 5, characterised in that the foils (4) and layers (5) are arranged around the outer surfaces of the inner boundary (2B) of the housing (2), and that the space (6) containing the foils (4) and the interlayers (5) has a residual gas pressure of less than 0.1 mbar.

## Revendications

1. Isolation thermique (1) avec une enceinte à double paroi (2), entre les deux parois (2A et 2B) de laquelle est prévu un volume (6) qui est mis sous vide et qui présente au moins une couche non métallique (4) ralentissant le flux de chaleur entre les deux parois (2A et 2B) de l'enceinte et agencée perpendiculairement au gradient de température, <u>caractérisée</u> en ce qu'à l'intérieur du volume (6) sont agencées les unes derrière les autres des minces couches (4) mutuellement parallèles séparées par des intervalles et formées par des feuilles de papier micacé, de papier à fibres de céramique ou à fibres de verre, et en ce qu'il y a, entre chaque paire de couches consécutives (4), au moins une couche intermédiaire (5, 15) d'espacement capable d'être sollicitée en pression.

2. Isolation thermique selon la revendication 1, caractérisée en ce que les couches intermédiaires (5) sont formées par des couches de tissu de verre.

3. Isolation thermique selon la revendication 1, caractérisée en ce que les couches intermédiaires (5) sont formées par du papier à fibres de verre.

4. Isolation thermique selon la revendication 1, caractérisé en ce que les couches intermédiaires (5) sont formées par du papier à fibres de céramique.

5. Isolation thermique selon la revendication 1, caractérisé en ce que les couches intermédiaires (15) sont formées par de la poudre de mica.

6. Isolation thermique selon l'une des revendications 1 à 5, caractérisée en ce que les feuilles (4) et les couches (5) sont agencées autour des surfaces extérieures de la délimitation intérieure (2B) de l'enceinte (2), et en ce que le volume (6) contenant les feuilles (4) et les couches intermédiaires (5) présentent une pression de gaz résiduelle inférieure à 0,1 mbar.

0 090 191

Fig.1

Fig.2